# FASCICULE DE BREVET EUROPEEN

(11) **EP 2 504 087 B1**
(45) Date de publication et mention de la délivrance du brevet: **07.10.2015**
(21) Numéro de dépôt: 09801237.0
(22) Date de dépôt: 25.11.2009
(51) Int. Cl.: B01F 9/00, B01F 9/02, B01F 9/06, B01F 9/08, B01F 13/10, B02C 15/06, B02C 25/00, B01F 15/06

(54) **PROCÉDÉ ET MACHINE DE FABRICATION DE PÂTE, NOTAMMENT DE PÂTE CARBONÉE POUR LA RÉALISATION D'ÉLECTRODES DE PRODUCTION D'ALUMINIUM**
VERFAHREN UND MASCHINE ZUR HERSTELLUNG EINER PASTE, IM BESONDEREN EINER KOHLEPASTE ZUR HERSTELLUNG VON ELEKTRODEN ZUR ALUMINIUMPRODUKTION
METHOD AND MACHINE FOR MANUFACTURING PASTE, IN PARTICULAR CARBON PASTE FOR MAKING ALUMINUM PRODUCTION ELECTRODES

(43) Date de publication de la demande: 03.10.2012
(73) Titulaire: Fives Solios S.A., 78100 Saint-Germain-en-Laye, (FR)
(72) Inventeur: ANDRE, Jean-François, F-38200 Villette De Vienne (FR)
(74) Mandataire: Cabinet Plasseraud
(86) Numéro de dépôt international: PCT/FR2009/052294
(87) Numéro de publication internationale: WO 2011/064461

(56) Documents cités:
- EP-A2- 0 210 966
- EP-A2- 0 486 371
- CA-A- 905 929
- DE-A1- 19 828 742
- FR-A1- 2 742 078
- GB-A- 498 285
- GB-A- 713 822
- GB-A- 1 541 052
- GB-A- 2 018 650
- GB-A- 2 246 720
- JP-A- 2009 172 493
- NL-C- 101 034
- US-A- 2 726 068
- US-A- 3 102 717
- US-A- 4 325 849
- US-A- 5 620 251
- US-A1- 2004 206 835

## Description

### DOMAINE DE L'INVENTION

La présente invention concerne un procédé et une machine de fabrication de pâte, et en particulier, parce qu'il s'agit d'une application pour laquelle le procédé et la machine selon l'invention semblent présenter le plus grand intérêt pour le déposant, l'invention concerne un procédé et une machine de fabrication de pâte carbonée, pour la réalisation d'électrodes de production d'aluminium par mélange et malaxage, éventuellement suivi d'un refroidissement, des matières premières utilisées pour la fabrication d'électrodes, et en particulier d'anodes et de cathodes destinées à l'électrblyse de l'alumine, les matériaux entrant dans la composition de la pâte carbonée étant du coke calciné, du coke de pétrole et des déchets d'anodes ou de cathodes recyclés, à titre de produits de charge, et du brai de houille, liquide ou solide; à titre de liant.

### ARRIERE PLAN DE L'INVENTION

On connaît plusieurs procédés et dispositifs de mélange et de malaxage couramment utilisés pour la fabrication de pâte carbonée.

L'un des dispositifs connus, historiquement le plus ancien, mais encore employé de nos jours, est constitué principalement d'une cuve fermée, sensiblement horizontale, à l'intérieur de laquelle, deux rotors, de forme particulière, appelés "bras en Z" tournent en sens opposé, chacun autour de l'un respectivement de deux axes sensiblement parallèles et sensiblement dans un même plan horizontal. Ce typé de machine effectue un traitement et une préparation de la pâte par "lots", c'est-à-dire que chaque machine délivre une quantité fixe de pâte préparée à intervalles fixes, par opposition à un procédé de traitement et préparation en continu dans lequel la pâte est préparée à débit constant.

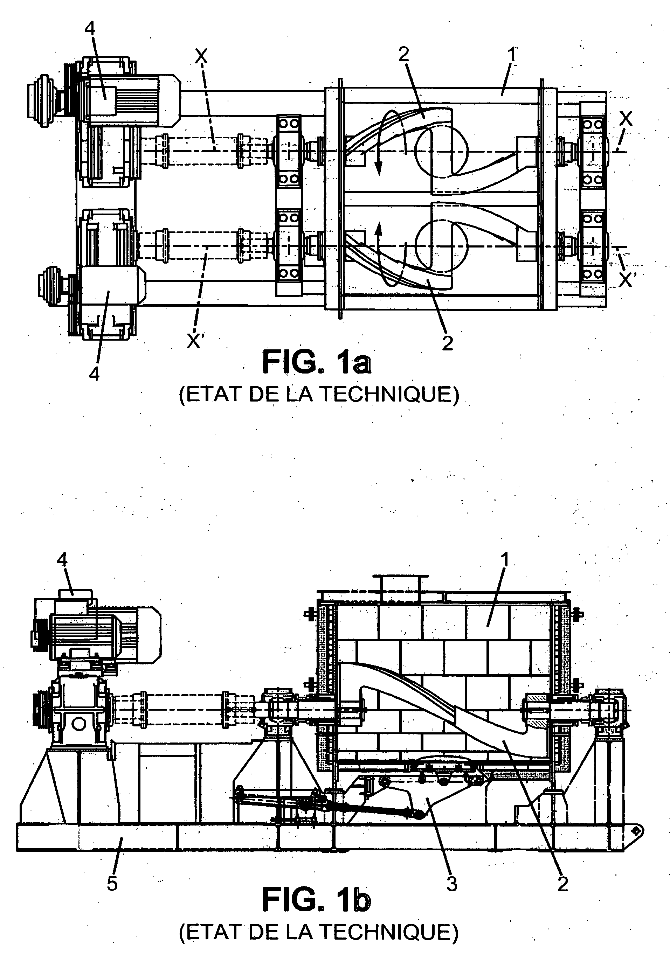

Les figures 1a et 1b montrent respectivement en plan, cuve ouverte vers le haut, et en élévation latérale avec coupe verticale partielle, une réalisation d'une telle machine. La cuve (1) reçoit les constituants de la pâte, du brai, comme liant, et le mélange de coke et de déchets carbonés recyclés (encore appelé "matières sèches" par opposition au brai qui est initialement liquide ou le devient à chaud). La cuve (1) est équipée d'une double enveloppe dans laquelle circule un fluide caloporteur chaud, à une température typiquement comprise entre 200 et 300 °C. Le coke et les déchets carbonés recyclés peuvent ainsi, dans une première étape de mélange du procédé, être réchauffés ou maintenus en température s'ils sont introduits chauds dans la cuve (1). Le brai peut être introduit sous forme liquide ou bien sous forme solide. Deux "bras en Z" (2) tournent en sens opposés et souvent à des vitesses différentes, en mélangeant et malaxant ou triturant le brai et les matières sèches. Chacun des bras est entraîné en rotation- par l'un respectivement de deux groupes moto-réducteurs (4) autour de son axe longitudinal respectif XX ou X'X'. Lorsque le procédé de mélange et malaxage est terminé, une porte (3), ménagée dans la base de la cuve (1), est ouverte pour décharger la pâte préparée. La cuve (1) et les deux groupes moto-réducteurs (4) sont installés sur un châssis (5) commun. Après vidange de la cuve (1), un nouveau cycle peut commencer.

Par exemple, dans une machine typique de ce premier type, la cuve (1) a une capacité de 5500 kg de pâte, lé cycle de mélange et malaxage dure environ une heure et la puissance motrice installée est de 190 kW. Une telle machine pèse environ 22000 kg et occupe un volume de 40 m³. Ces caractéristiques montrent que ce type de machine est peu performant : le débit, rapproché de la masse et de l'encombrement de cette machine est faible, alors que la puissance mise en jeu est très élevée pour la production réalisée. En fait, le mélange et le malaxage par les "bras en Z" (2) sont peu efficaces. Ce manque de rendement est compensé par la durée de malaxage au détriment du débit. Il est de plus nécessaire de prévoir une grande réserve de puissance au niveau des groupes moto-réducteurs (4), pour faire face à toutes les situations car la machine ne comporte pas de moyens de régulation pendant le cycle : le remplissage de la cuve (1) reste fixe et la température de la pâte ne peut-être modifiée que très lentement. La consommation effective moyenne est bien inférieure aux possibilités nominales des moteurs installés dans les groupes moto-réducteurs (4) utilisés

Une machine de ce type et le procédé de fabrication de la pâte mise en oeuvre par cette machine, par mélange et malaxage des constituants de la pâte dans des conditions de pressurisation mécaniques (par compression des constituants de la pâte dans la cuve), sont décrits, dans le document de brevet FR 2 022 697, auquel on se rapportera pour davantage de précision à son sujet.

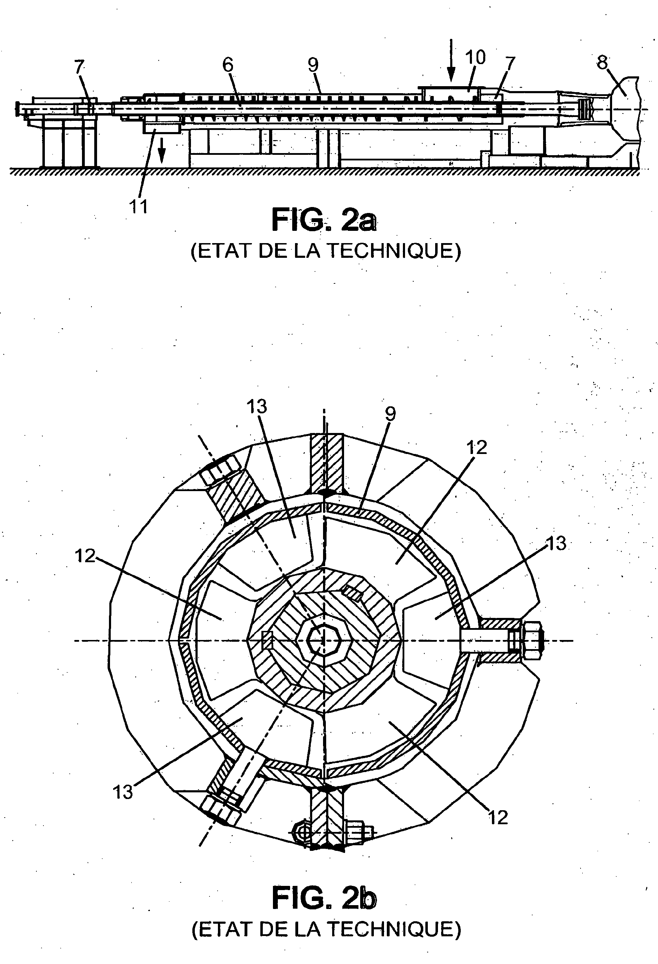

De nos jours, le dispositif de fabrication de pâte carbonée, par mélange et malaxage de ses constituants, liant et produits de charges tels qu'indiqués ci-dessus le plus couramment utilisé est un mélangeur-malaxeur à vis horizontale. Un déplacement axial alternatif est superposé au mouvement de rotation de la vis. Ce mouvement de va et vient améliore le mélange des constituants de la pâte et le malaxage. Une machine connue mettant en oeuvre ce procédé connu de mélange et de malaxage est représentée en coupe schématique axiale sur la figure 2a, en coupe transversale à plus grande échelle sur la figure 2b.

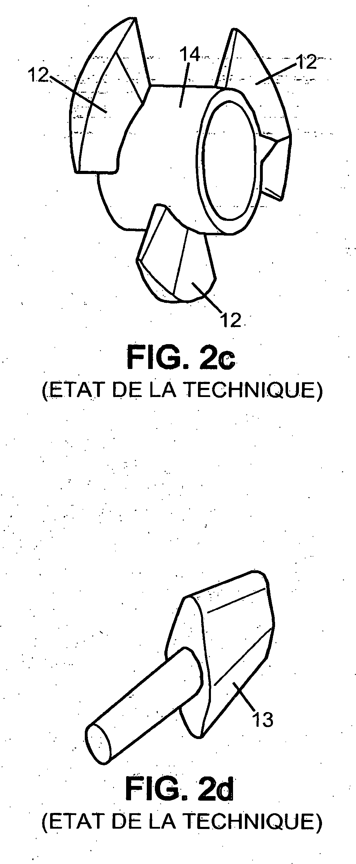

Une vis (6) reposant sur deux paliers (7) et comportant principalement un arbre muni d'un filet hélicoïdal en saillie, vers l'extérieur de l'arbre est entraînée en rotation par un groupe de commande (8). La vis (6) est logée à l'intérieur d'un bâti cylindrique (9) muni d'une boite d'entrée (10) et d'une boite de sortie (11). Les matériaux bruts, préalablement chauffés à la température de malaxage, typiquement de 180 °C, sont introduits dans le mélangeur-malaxeur au niveau de la boite d'entrée (10). Le filet de la vis (6) n'est pas continu, mais interrompu sur une partie de la circonférence. La figure 2b montre un arrangement typique où le filet est composé de trois tronçons identiques (12), placés régulièrement à 120 ° les uns par rapport aux autres sur un tour. En face des vides ainsi délimités, des dents fixes (13) sont installées sur le bâti cylindrique (9), et en saillie à l'intérieur de ce dernier, vers l'axe de rotation de la vis (6). Les figures 2c et 2d montrent des dessins en perspective respectivement des tronçons de filets (12), décalés l'un par rapport à l'autre de 120° autour de l'axe de rotation de la vis (6), et en saillie sur l'arbre (14) de la vis (6), dont seul un tronçon axial est représenté, pour la figure 2c et une dent fixe (13) avec son pied d'ancrage dans le bâti cylindrique (9) permettant de mieux comprendre l'agencement.

Sous l'effet de la rotation continue de la vis (6), les matériaux constitutifs de la pâte sont animés d'un mouvement de translation horizontale, qui les entraîne vers la boite de sortie (11). Simultanément, un mouvement de va et vient à l'intérieur du bâti (9) est imposé à la vis (6). Ce mouvement de va-et-vient est synchronisé à la rotation continue de la vis (6) autour de son axe, de façon à ce que les secteurs ou tronçons (12) du filet de la vis (6) puissent passer entre les dents fixes (13) du bâti (9) sans interférer avec ces dents. La rotation continue ainsi que la composante d'avance du mouvement alternatif, assurent donc la progression des matériaux de la boîte d'entrée (10) vers la boîte de sortie (11). Cette progression est contrariée par les obstacles que constituent les dents fixes (13) du bâti (9), et par le mouvement de recul de la vis (6). Ces déplacements axiaux et radiaux combinés brassent efficacement les matériaux constitutifs de la pâte tout en appliquant des contraintes de cisaillement au mélange de ces matériaux, entre les dents fixes (13) et les secteurs ou tronçons (12) de filet de la vis (6).

Le fonctionnement d'une machine de ce type est continu. Les matériaux constitutifs de la pâte sont introduits à débit constant et contrôlé et ressortent à la même cadence. Dans la boite de sortie (11), deux portes manoeuvrables à distance permettent de contrôler la dimension de l'orifice de sortie du mélangeur-malaxeur. Il est ainsi possible de faire varier le degré de remplissage de la machine pour maintenir un niveau constant de puissance consommée. Une machine de ce type couramment utilisée est capable d'un débit de pâte de 35 tonnes à l'heure, avec une puissance installée de 350 kW. Grâce à la régulation de la puissance, les rendements sont bien meilleurs que ceux des mélangeurs-malaxeurs du type à deux "bras en Z" tels que décrits précédemment en référence aux figures 1a et 1b.

Par leur conception, le type de machine selon les figures 2a et 2b contient instantanément peu de pâte, typiquement de l'ordre d'une tonne soit la masse moyenne des anodes produites. Pour cette raison, il est souvent reproché à ces machines de ne pas homogénéiser suffisamment la pâte pour estomper les variations de qualité des matières premières utilisées pour constituer la pâte.

Une machine de fabrication de pâte carbonée selon ce second type est schématiquement décrite dans le document de brevet US-4 652 226.

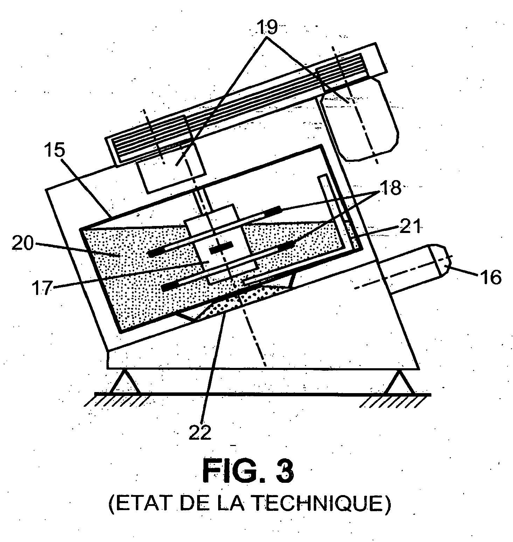

Une machine, de fabrication de pâte carbonée d'un troisième type a été introduite récemment pour effectuer le malaxage de la pâte : il s'agit d'un mélangeur-malaxeur à cuve rotative inclinée dans laquelle un outil de mélange et malaxage tourne à la manière d'un pétrin. Les différents composants d'une telle machine sont schématisés sur la figure 3 annexée.

Une cuve cylindrique (15), d'axe incliné par rapport à la verticale, tourne sur elle-même, entraînée par un groupe moto- réducteur (16). Un outil rotatif (17) muni de plusieurs battoirs (18) est entraîné en rotation autour de l'axe incliné de la cuve (15) par un autre groupe moto-réducteur (19). Dans sa rotation, la cuve (15) entraîne les matériaux (20) dans la zone de l'outil rotatif (17) où les matériaux constitutifs de la pâte subissent des actions de cisaillement et de dispersion favorisant le mélange. Un racleur fixe (21) décolle la pâte des parois latérales inclinées et du fond de la cuve (15) pour faire retomber cette pâte verticalement sur elle-même. Une porte (22) à ouverture variable, située au centre de la cuve (15) permet, de décharger la pâte préparée.

La machine fonctionne à flux continu. L'alimentation en matériaux à mélanger et à malaxer est contrôlée en qualité et en quantité. La quantité de matériaux conservés à l'intérieur de la cuve (15) peut être contrôlée par l'ouverture de la porte (22). Naturellement, la puissance consommée varie comme le degré de remplissage de la cuve (15). Il est donc possible d'assurer une régulation fine de la consommation énergétique pour optimiser la qualité du mélange et le rendement de la machine. Des résultats similaires sont aussi obtenus en contrôlant la vitesse de rotation de l'outil rotatif (17).

Une machine typique selon la figure 3, capable d'un débit continu de pâte de 35 tonnes par heure contient 2500 kg de pâte et est équipée d'une puissance installée de 200 kW. La contenance de la machine correspond en moyenne à la production de deux anodes et demie, ce qui augure une bonne qualité d'homogénéisation.

Une machine selon la figure 3 est couramment utilisée en complément d'autres types de mélangeurs-malaxeurs, pour effectuer un complément d'homogénéisation de la pâte et surtout pour la refroidir. En effet, il est intéressant d'effectuer le malaxage à haute température, typiquement entre 180 et 200 °C, pour laquelle la viscosité du brai est plus faible afin d'optimiser la pénétration du brai dans les grains de coke et de déchets carbonés recyclés. Cependant, comme le procédé de réalisation d'électrodes, en aval du mélangeur-malaxeur nécessite une pâte à plus basse température, une étape de refroidissement de la pâte est nécessaire. A cet effet, de l'eau est introduite à débit contrôle dans la cuve (15) durant le processus de malaxage, pour amener la pâte à la température voulue, typiquement de 140 à 160 °C.

Cette machine selon la figure 3, couramment utilisée en refroidisseur, n'a commencé que récemment à être installée aussi comme machine de mélange et malaxage primaire pour la préparation de la pâte carboneé, en particulier de pâte d'anode.

Il ressort de la brève présentation de l'état de la technique, tel que donnée que la préparation dé la pâte carbonée pour la réalisation d'électrodes de production de l'aluminium utilise des machines de technologies variées, avec leurs avantages et leurs inconvénients. Les procédés si différents mis en oeuvre par ces différentes machines donnent cependant des résultats finaux qui sont voisins, le manque d'efficacité des actions de mélange et de malaxage pouvant être compensé par le temps de traitement, ce qui laisse à penser que les procédés de mélange et malaxage de pâte carbonée pour la réalisation d'électrodes ne sont pas encore optimisés. Le malaxage à haute température est cependant une constante pour obtenir un bon résultat rapidement. Mais, du fait des besoins en aval des mélangeurs-malaxeurs, pour la réalisation des électrodes, il est nécessaire de refroidir la pâte en fin de malaxage. Pour cette raison, les installations modernes de fabrication de pâte carbonée pour électrodes sont toujours équipées de deux appareils ou machines installé(e)s en cascade : un mélangeur-malaxeur selon l'un des trois types précédemment décrits et un refroidisseur, le plus souvent à cuve rotative inclinée, selon la figure 3 décrite ci-dessus.

GB 713 822 décrit un dispositif pour la préparation et le mélange de matériaux de moulage de fonderie.

### BREVE DESCRIPTION DE L'INVENTION

L'un des buts de l'invention est de proposer un procédé et une machine de fabrication de pâte, en particulier carbonées par mélange et malaxage des matériaux composant la pâte et utilisant des principes de traitement plus efficaces que ceux mis en oeuvre dans l'état de la technique, afin de faire pénétrer le liant, en particulier du brai, en particulier du brai de houille liquide, le plus possible dans les produits de charge, en particulier au plus profond des grains de coke, de préférence de coke de pétrole calciné.

Un autre but de l'invention est de proposer un procédé et une machine de fabrication de pâte par mélange et malaxage des composants optimisant l'homogénéité du mélange délivré pour gommer les variations de qualité, de composition et de dosage des matériaux constitutifs.

Un autre but encore de l'invention est de réaliser une machine de fabrication de pâte par mélange et malaxage, délivrant directement la pâte à la température requise sans nécessiter de machine complémentaire. Autrement dit, la machine de fabrication de pâte par mélange et malaxage des constituants de la pâte, telle que proposée effectue, à elle seule, les opérations de mélange, malaxage et refroidissement de la pâte, qui sont habituellement exécutées dans deux machines installées en cascade.

A cet effet, l'invention propose un procédé pour préparer une pâte par mélange ou malaxage de matériaux, notamment pour la réalisation d'électrodes de production d'aluminium, selon la revendication 1.

Ainsi, les matériaux sont répartis et compactés en périphérie de la cuve par centrifugation, et projetés sur l'outil d'émiettement, à l'écart de la périphérie de la cuve en profitant de la pesanteur pour accroitre la vitesse à laquelle les matériaux entrent en contact avec l'outil d'émiettement. En outre, on dispose à l'intérieur de la cuve d'un grand volume pour recevoir des matériaux et ainsi homogénéiser le mélange délivré.

Selon une autre caractéristique de l'invention, de préférence à l'opération c) on décolle les matériaux avec un racleur maintenu fixe au-dessus de l'outil d'émiettement, on munit l'outil d'émiettement de couteaux et on fait tourner l'outil d'émiettement en rotation suivant un axe de rotation d'émiettement sensiblement parallèle à l'axe de révolution.

On obtient ainsi un émiettement efficace des matériaux.

De préférence, conformément à l'invention, le procédé comprend de manière complémentaire les opérations suivantes :
- on dispose les couteaux sensiblement radialement à l'axe de rotation d'émiettement, de sorte à venir sensiblement au contact de la surface interne de la cuve au cours de la rotation de l'outil d'émiettement,
- on fait tomber les matériaux entre l'axe de rotation d'émiettement et l'endroit où les couteaux viennent sensiblement au contact de la surface interne de la cuve, et
- on fait tourner l'outil d'émiettement dans le même sens que la cuve.

On effectue ainsi en outre un cisaillement et un malaxage des matériaux avec l'outil d'émiettement, et on évite que les matériaux s'accumulent en amont de l'outil d'émiettement. L'efficacité de l'outil d'émiettement pour mélanger et malaxer les matériaux est ainsi accrue.

Selon une autre caractéristique de l'invention, à l'opération b) on comprime en outre mécaniquement les matériaux.

La compression mécanique complète la compression des matériaux par centrifugation et améliore le mélange et le malaxage des matériaux.

Selon une caractéristique à l'opération b) on fait passer les matériaux entre un galet et la surface interne de la cuve.

Le procédé présente en outre les caractéristiques suivantes :
- à l'opération a), on introduit les matériaux à mélanger et à malaxer à une extrémité amont de la cuve,
- lors d'une opération e), on récupère les matériaux intimement mélangés et malaxés à une extrémité aval de la cuve, ladite extrémité aval étant opposée à l'extrémité amont suivant la direction de l'axe de révolution,
- on mélange et on malaxe les matériaux en continu, en réalisant simultanément les opérations a), b), c), d) et e), des matériaux étant introduits par l'extrémité amont pendant que des matériaux introduits précédemment sont maintenus dans la cuve et que d'autres matériaux, intimement mélangés, sont récupérés à.l'extrémité aval.

On réalise ainsi la pate par mélange et malaxage des matériaux en continu, ce qui procure une bonne efficacité de traitement des matériaux.

Selon une caractéristique conforme à l'invention, suivant la direction de l'axe de révolution, on dispose l'outil d'émiettement sensiblement jusqu'à l'extrémité amont, mais on ménage un espace amont entre l'extrémité amont et le galet.

Ainsi, on améliore encore l'efficacité du traitement des matériaux, en particulier en homogénéisant le liant et les charges avant de favoriser en particulier la pénétration du liant dans les charges par passage entre le galet et la surface interne de la cuve.

Selon une autre caractéristique conforme à l'invention, suivant la direction de l'axe de révolution, on dispose l'outil d'émiettement sensiblement jusqu'à l'extrémité aval, mais on ménagé un espace aval entre l'extrémité aval et le galet.

On peut ainsi refroidir la pate formée par les matériaux mélangés et malaxés avant de la récupérer à la sortie de la cuve pour l'utiliser, tout en continuant le mélange et le malaxage.

On déverse de l'eau sur les matériaux dans ledit espace aval pour les refroidir.

Selon une autre caractéristique complémentaire conforme à l'invention, de préférence on introduit et continu dans la cuve, en partie inférieure de ladite cuve, un liant liquide, en particulier du brai de houille liquide, puis un produit de charge en particulier du coke calciné sur le brai de houille.

Le produit de charge se trouve ainsi au-dessus du liant, avant d'être mélangé et malaxer, ce qui améliore encore l'efficacité du traitement des matériaux.

Enfin, de préférence, on déplace les matériaux vers l'extrémité aval avec l'outil d'émiettement.

Concernant le dispositif, on connait déjà un dispositif, tel que celui illustré à la figure 3, comprenant :
- un châssis,
- une cuve présentant une surface interne s'étendant suivant un axe de révolution,
- un dispositif d'entrainement de la cuve en rotation autour de l'axe de révolution par rapport au châssis,
- un racleur disposé à proximité de la surface interne de la cuve, et
- un outil d'émiettement.

Afin d'apporter les améliorations précitées, l'invention propose un dispositif selon la revendication 7.

Ainsi, les matériaux décollés de la surface interne de la cuve par le racleur sont projetés sur l'outil d'émiettement en profitant de la pesanteur pour accroitre la vitesse à laquelle les matériaux entrent en contact avec l'outil d'émiettement. En outre, la cuve peut contenir une grande quantité de matériaux pour homogénéiser le mélange.

Selon une autre caractéristique conforme à l'invention, le dispositif comprend en outre un galet libre en rotation autour d'un axe de rotation de compression sensiblement parallèle à l'axe de révolution et des moyens de pression pour exercer une pression sur le galet en direction de la surface interne de la cuve.

Les matériaux sont ainsi compactés par le galet, avant d'être émiettés par l'outil d'émiettement, ce qui améliore l'efficacité du traitement des matériaux.

Selon une caractéristique complémentaire conforme à l'invention, de préférence le galet est disposé sensiblement au bas de la cuve et l'outil d'émiettement est situé plus haut que le galet.

Le positionnement du galet en bas de la cuve renforce l'efficacité du galet, quitte à ce que le positionnement de l'outil de compactage plus haut que le galet réduise la hauteur de laquelle tombe les matériaux sur l'outil d'émiettement.

Selon une autre caractéristique complémentaire conforme à l'invention, les moyens de pression comprennent de préférence des vérins et un dispositif d'asservissement des vérins contrôlant l'application d'une pression constante du galet le long l'axe de rotation de compression.

Ainsi, on peut adapter la pression sur les matériaux à la quantité de matériaux dans la cuve en déplaçant l'axe de rotation de compression pour améliorer l'efficacité du galet.

Selon une caractéristique encore complémentaire conforme à l'invention, de préférence les vérins sont décalés l'un par rapport à l'autre suivant la direction de l'axe de rotation de compression et le dispositif d'asservissement contrôle un déplacement simultané des vérins pour maintenir constant l'angle entre l'axe de rotation de compression et l'axe de révolution.

Ainsi, on peut déplacer l'axe de rotation de compression de manière à ce qu'il soit toujours parallèle à la même direction, pour optimiser l'efficacité du galet.

Selon une autre caractéristique conforme à l'invention, l'outil d'émiettement est de préférence entrainé en rotation suivant un axe de rotation d'émiettement sensiblement parallèle à l'axe de révolution.

Le dispositif présente en outre de préférence les caractéristiques suivantes :
- la cuve comprend en outre à une extrémité amont au moins une entrée de matériaux pour introduire en continu des matériaux à mélanger et malaxer à l'intérieur de la cuve et à une extrémité aval une sortie de matériaux pour extraire des matériaux mélangés et malaxés de la cuve, l'extrémité amont étant disposée à l'opposé de l'extrémité aval suivant la direction de l'axe de révolution, et
- l'axe de révolution est légèrement incliné vers le bas en direction- de l'extrémité aval, afin d'induire un déplacement des matériaux dans la cuve de l'extrémité, amont vers l'extrémité aval.

On peut ainsi traiter en continu des matériaux progressant automatiquement de l'entrée vers la sortie, ce qui améliore l'efficacité du dispositif.

En alternative, le dispositif présente en outre de préférence les caractéristiques suivantes :
- la cuve comprend en outre à une extrémité amont au moins une entrée de matériaux pour introduire en continu des matériaux à mélanger et malaxer à l'intérieur de la cuve et à une extrémité aval une sortie de matériaux pour extraire des matériaux mélangés et malaxés de la cuve, l'extrémité amont étant disposée à l'opposé de l'extrémité aval suivant la direction de l'axe de révolution, et
- l'outil d'émiettement s'écarte progressivement de la surface intérieure de la cuve en direction de l'extrémité aval.

Ainsi également on peut traiter en continu des matériaux progressant automatiquement de l'entrée vers la sortie, ce qui améliore l'efficacité du dispositif.

Selon une autre caractéristique conforme à l'invention, de préférence le dispositif comprend en outre un bras de réglage portant le racleur, ledit bras de réglage étant apte à pivoter autour de l'axe de révolution pour ajuster la position du racleur.

On peut ainsi adapter la position du racleur aux conditions de mélange et de malaxage des matériaux, et en particulier en fonction de la quantité de matériaux dans la cuve.

Selon une caractéristique complémentaire, de préférence la cuve comprend à l'extrémité amont une entrée chauffée de matériau liquide à une température supérieure ou égale à 150°C et une entrée non chauffée de matériau non liquide.

Ainsi, les matériaux sont introduits dans la cuve de manière à favoriser leur mélange et leur malaxage.

Selon une caractéristique complémentaire conforme à l'invention, l'entrée de matériau liquide et l'entrée de matériau non liquide sont disposées en partie inférieure de la cuve et l'entrée de matériau liquide est disposée en amont de l'entrée de matériau non liquide, suivant le sens de rotation de la cuve.

Le matériau non-liquide est ainsi déposé au-dessus du matériau liquide, ce qui favorise le mélange et le compactage des matériaux, en particulier dans le cas où le matériau liquide est un liant et le matériau non-liquide comprend des charges.

Selon une autre caractéristique conforme à l'invention, l'outil d'émiettement comprend de préférence des couteaux s'étendant radialement à l'axe de rotation d'émiettement et adaptés pour venir sensiblement au contact de la surface interne de la cuve.

### BREVE DESCRIPTION DES DESSINS

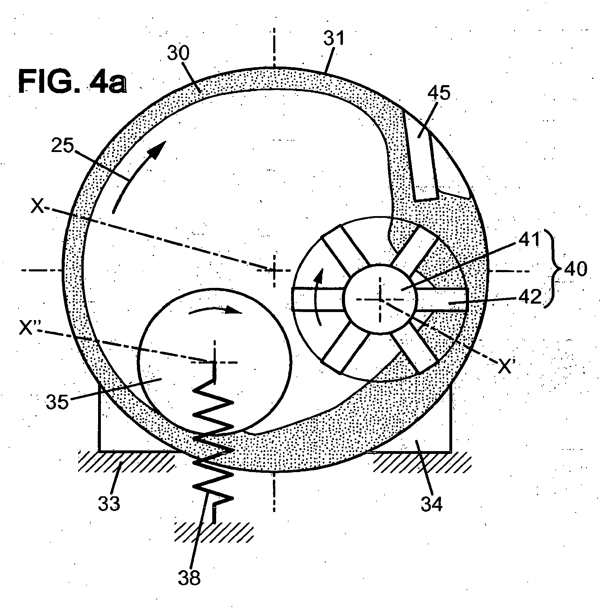

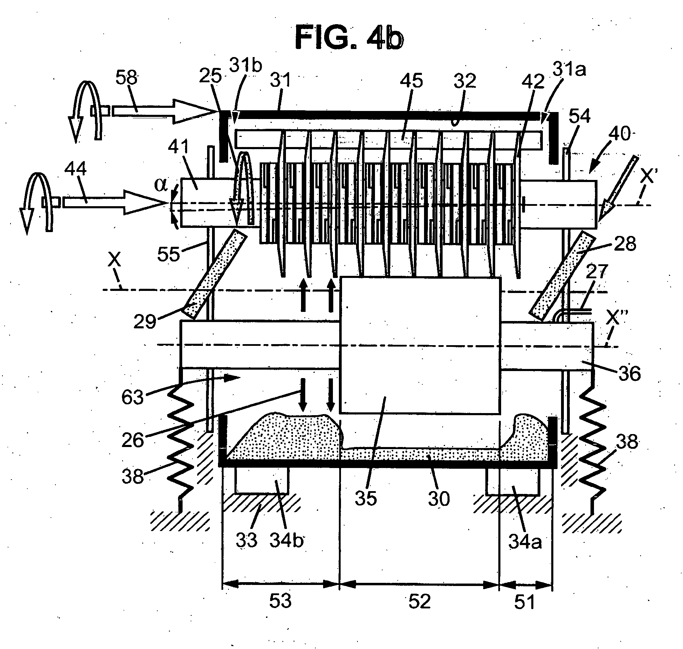

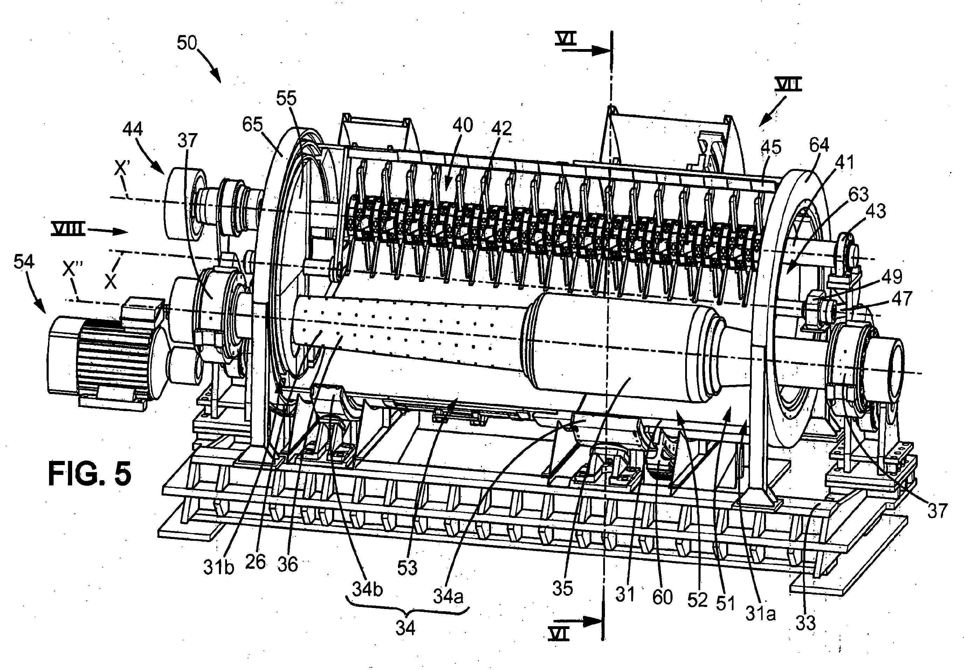

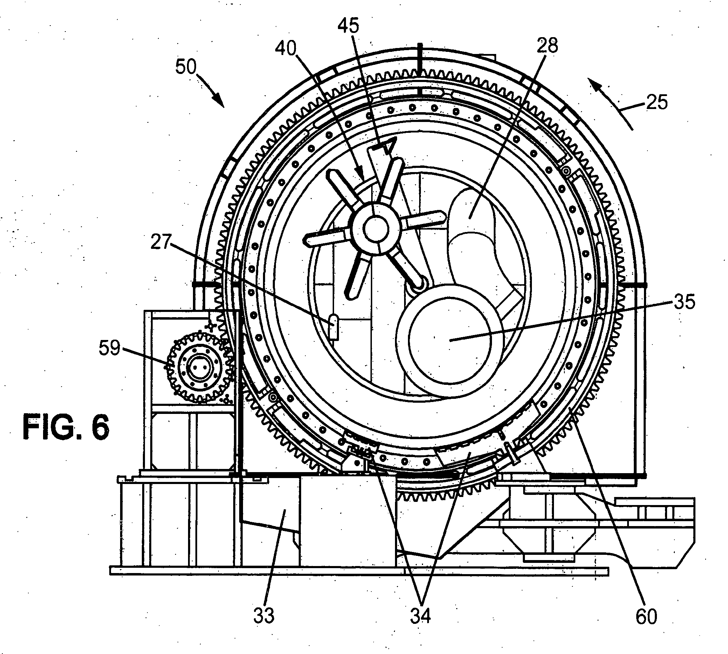

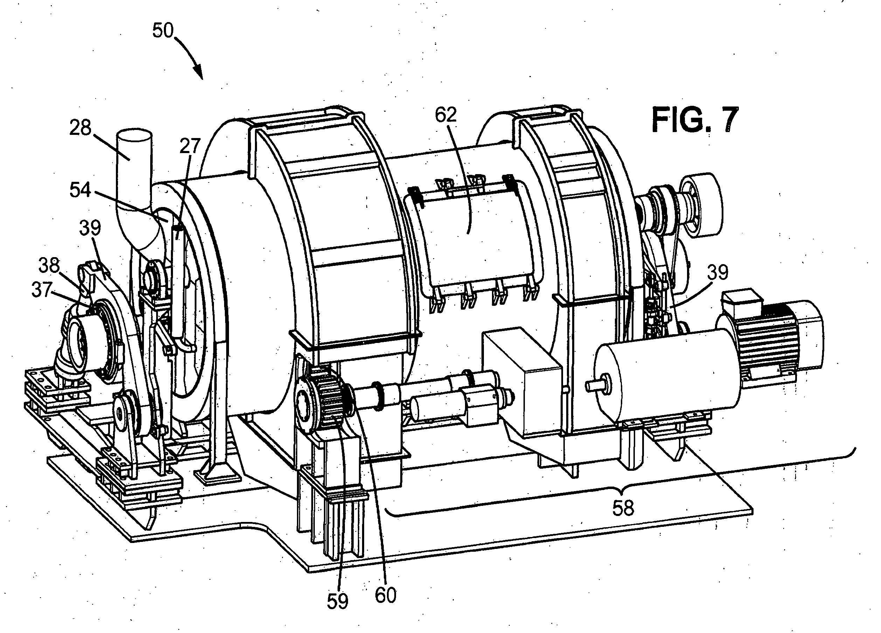

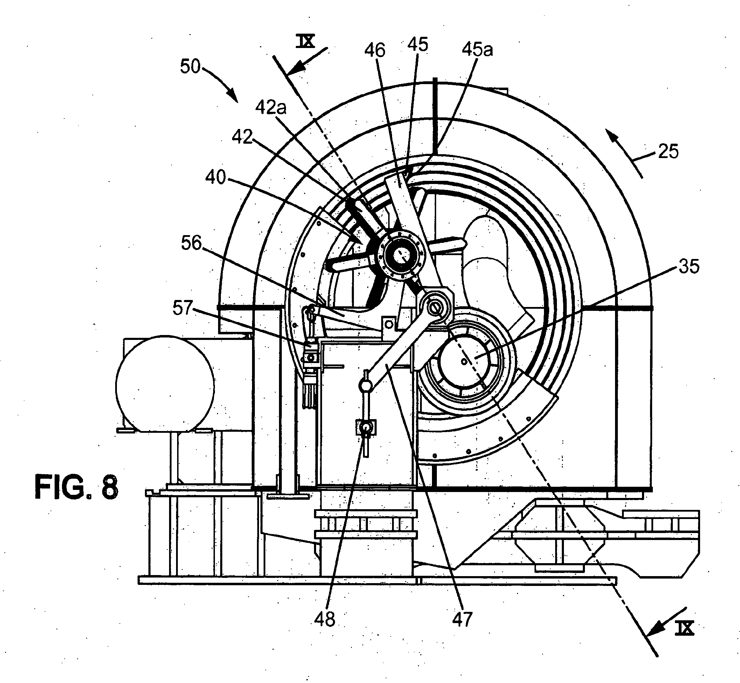

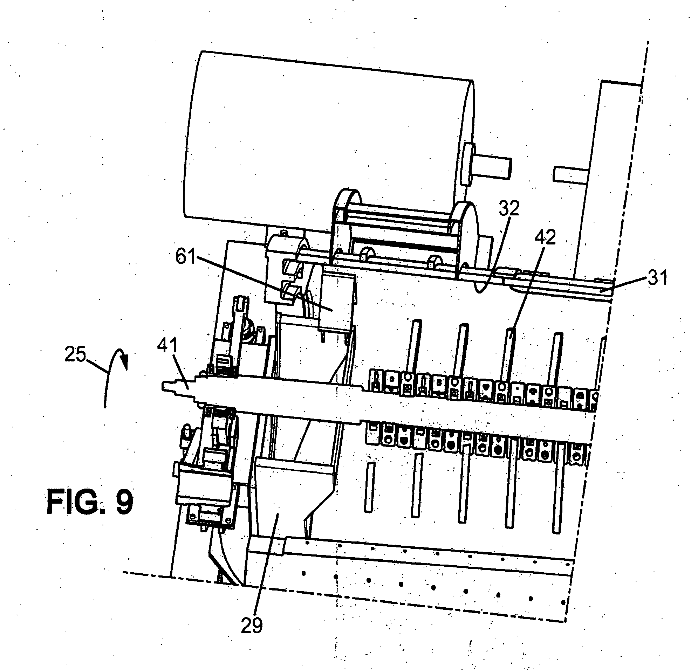

D'autres avantages et caractéristiques de l'invention- ressortiront mieux de la description qui va suivre d'un mode de réalisation de l'invention, donné à titre d'exemple non limitatif, d'un dispositif de mélange et de malaxage conforme à l'invention, en référence aux dessins annexés, sur lesquels :
- **la** figure **1a** est une vue de dessus d'un dispositif de mélange et de malaxage de l'art antérieur, de-type "bras en Z", dont le couvercle de la cuve a été enlevé pour montrer l'agencement des rotors dans la cuve,
- **la** **figure 1b** est un vue en coupe frontale du malaxeur de la figure 1a,
- **la** **figure 2a** est une représentation simplifiée en coupe frontale d'un autre dispositif de mélange et de malaxage de l'art antérieur, de type à "vis horizontale",
- **la** **figure 2b** est une vue en coupe transversale de l'appareil représenté à la figure 2a montrant l'agencement d'outils de malaxage mobiles montés sur la vis et d'outils fixes montés sur un bâti,
- **la** **figure 2c** est une vue en perspective d'un outil mobile monté sur la vis du malaxeur de la figure 2a,
- l**a** **figure 2d** est une vue en perspective d'un outil fixe monté sur le bâti- du malaxeur de la figure 2a,
- **la** **figure 3** est un schéma vu en coupe frontale d'un autre dispositif de mélange et de malaxage de l'art antérieur,
- **la** **figure 4a** représente schématiquement en coupe transversale un dispositif de mélange et de malaxage conforme à l'invention,
- **la** **figure 4b** représente schématiquement en coupe frontale le dispositif de mélange et de malaxage conforme à l'invention,
- **la** **figure 5** est une vue en perspective avec arrachement du dispositif de mélange et de malaxage conforme à l'invention,
- **la** **figure 6** est une vue en coupe transversale, selon la ligne repérée VI-VI à la figure 5, du dispositif de mélange et de malaxage conforme à l'invention,
- **la** **figure 7** est une vue du dispositif de mélange et de malaxage conforme à l'invention selon la flèche repérée VII à la figure 5,
- **la** **figure 8** est une vue du dispositif de mélange et de malaxage conforme à l'invention selon la flèche repérée VIII à la figure 5, avec arrachement,
- **la** **figure 9** est une vue partielle, en coupe suivant la ligne repérée IX-IX à la figure 8, du dispositif de mélange et de malaxage conforme à l'invention.

Les figures 4a à 9 illustrent un dispositif 50 de mélange et de malaxage de matériaux 30 pour former une pâte destinée notamment à la fabrication de blocs anodiques pour l'électrolyse de l'aluminium.

Ce dispositif 50 comprend essentiellement un châssis 33, une cuve 31, un dispositif 58, 59, 60 d'entrainement en rotation de la cuve, un outil d'émiettement 40, un racleur 45 et un galet 35.

La cuve 31 est sensible cylindrique, de section circulaire. Elle présente une surface - interne 32 cylindrique de section circulaire et présente un axe de révolution X. Elle est montée pivotante sur le châssis 33, sur lequel elle repose par l'intermédiaire de patins 34a, 34b formant paliers 34.

La cuve 31 présente selon la direction de l'axe de révolution X une extrémité amont 31a obturée par un flasque amont 54 et une extrémité aval 31b obturée un flasque aval 55. Le flasque amont 54 et le flasque aval 55 sont fixes par rapport au châssis 33 et constitués chacun par une plaque s'étendant sensiblement perpendiculairement à l'axe de révolution X. Le flasque amont 54 et le flasque aval 55 sont portés respectivement par un cadre amont 64 et un cadre aval 65 fixés sur lé châs.sis 33 et se raccordant à la cuve 31 par des chicanes d'étanchéité.

L'axe de révolution X est sensiblement horizontal. Il peut être légèrement incliné vers le bas en direction de l'extrémité aval 31b, afin d'induire une progression gravitaire aux matériaux 30 en direction de l'extrémité aval 30b.

Le dispositif d'entrainement comprend un groupe moto-réducteur 58, un pignon 59 et une couronne dentée 60. Le groupe moto-réducteur 58 est apte à entrainer en rotation le pignon 59, de préférence par l'intermédiaire notamment d'un réducteur et d'un embrayage Le pignon 59 engrène avec la couronne dentée 60 s'étendant autour de la cuve 31.

La cuve 31 délimite par sa surface intérieure 32 un volume intérieur 63, également délimité, suivant la direction de l'axe de révolution X, par le flasque amont 54 et le flasque aval 55. Le volume intérieur 63 comprend une zone amont 51 d'homogénéisation, une zone centrale 52 de compactage et de malaxage, et une zone aval 53 de refroidissement.

L'outil d'émiettement 40 comprend un rotor constitué d'un arbre 41 et de couteaux 42 fixés sur l'arbre 41. L'arbre 41 s'étend suivant un axe de rotation d'émiettement X', parallèle à l'axe de révolution X. Un moyen d'entrainement 44, de préférence un groupe moto-réducteur, est apte à entrainer l'arbre 41 en rotation autour de l'axe de rotation d'émiettement X' par rapport au châssis 33, dans le même sens 25 que la cuve 31.

Les couteaux 42 s'étendent radialement à l'axe de rotation d'émiettement jusqu'à une extrémité radiale 42a. Au cours de la rotation de l'arbre 41, l'extrémité radiale 42a des couteaux vient sensiblement au contact de la surface interne 32..de la cuve 31. La vitesse linéaire de l'extrémité radiale 42a des couteaux est supérieure à la vitesse linéaire de la surface interne 32 de la cuve 31, de sorte que les couteaux 42 ont tendance à accélérer les matériaux 30, et non à créer une accumulation de matériaux devant l'outil d'émiettement.

Les couteaux 42 sont répartis entre le flasque amont 54 et le flasque aval 55, autrement dit disposés dans la zone amont 51, la zone centrale 52 et la zone aval 53. De préférence, les couteaux 42 comprennent une partie tranchante portée par un support fixé sur l'arbre 41 et constitué d'un anneau en au moins deux parties assemblés autour de l'arbre 41 par exemple avec des boulons.

L'arbre 41 traverse le flasque amont 54 et le flasque aval 55. Il est relié au châssis 33 par l'intermédiaire de paliers 43 et d'un bras support 56. Les paliers 43 supportant l'arbre 41 de l'outil d'émiettement 40 sont de préférence munis de roulements à rouleaux ou de bagues anti-friction. Le bras support 56 est apte à être déplacé sous l'action d'un actionneur, constitué dans ce mode de réalisation par un vérin 57, afin de modifier la distance entre l'axe de rotation d'émiettement X' et la surface interne 32 de la cuve 31.

De préférence, l'axe de rotation d'émiettement X' est légèrement incliné par rapport à l'axe de révolution X d'un angle α de quelques dixièmes de degrés à quelques degrés, de sorte que l'outil d'émiettement 30 soit plus proche de la surface intérieure 32 de la cuve à proximité de l'extrémité amont 31a qu'à proximité de l'extrémité aval 31b, de façon à créer une progression des matériaux 30 dans la cuve 31 de l'extrémité amont 31a vers l'extrémité aval 31b. Avantageusement, l'angle **α** entre l'axe de rotation d'émiettement X.' et l'axe de révolution X est réglé par les vérins 57 et les bras support 56. Cet angle **α** détermine la vitesse de progression des matériaux 30 à l'intérieur de la cuve 31 et par conséquent le niveau de remplissage de la cuve 31 en matériaux 30. Le contrôle de la vitesse d'avancement permet d'ajuster très exactement le fonctionnement de l'outil d'émiettement 40 à la quantité de matériau 30 délivrée par des entrées 27, 28 et d'utiliser la totalité de la puissance du groupe moto-réducteur 44 disponible pour maximiser le débit de matériaux 30 traités. A cet effet, le réglage de la position de l'outil d'émiettement 40 est avantageusement asservi à la puissance du groupe moto-réducteur 44 pour maintenir le groupe moto-réducteur 44 à son niveau optimum.

Le racleur 45 s'étend en regard de la surface interne 32 de la cuve 31. Il comprend une surface active 45a destinée à venir au contact de matériaux 30 entrainés en rotation par la cuve 31, afin de les diriger vers les couteaux 42 de l'outil d'émiettement 40. La surface active 45a s'étend parallèlement à la direction de l'axe de révolution X, du flasque amont 54 au flasque aval 55, autrement dit dans la zone amont 51, la zone centrale 52 et la zone aval 53. Elle forme une angle d'environ 45 degrés avec la direction de déplacement des matériaux, autrement dit avec la surface interne 32 de la cuve 31 à l'endroit de laquelle le racleur 45 se trouve en regard.

Tel qu'illustré en particulier à la figure 8, le racleur 45 est porté à chacune de ses extrémités selon la direction de l'axe de révolution X par un bras 46 monté pivotant dans un palier 49. Une bielle 47 solidaire dudit bras 46 commande la rotation du racleur 45 autour de l'axe de révolution X, sous l'action d'un système vis-écrou 48 (dans le mode de réalisation illustré) ou analogue, afin d'ajuster la position du racleur 45 par rapport à l'outil d'émiettement 40.

La position du racleur 45 dans la cuve 31 est ainsi continûment et facilement ajustable. La position du racleur 45 détermine la manière dont la pâte décollée de la surface intérieure 32 de la cuve 31 entre en contact avec les couteaux 42 de l'outil d'émiettement 40. Le réglage fin de cette géométrie est un avantage essentiel, car l'efficacité l'outil d'émiettement 40 en est très dépendante. Grâce au réglage du racleur 45, le rendement du malaxage peut être optimisé.

La surface active 45a est de préférence formée par des outils de raclage interchangeables, munis par exemple de barrettes en céramique ou en carbure de tungstène pour résister à l'usure.

Le galet 35 présente une surface extérieure 35a cylindrique de section circulaire s'étendant suivant un axe de rotation de compression X". La surface extérieure 35a s'étend en regard de la surface interne 32 de la cuve 31, uniquement dans la zone centrale 52. Le galet 35 est porté par un arbre 36 traversant le flasque amont 54 et le flasque aval 55. L'arbre 36 est monté rotatif sur le châssis 33 par l'intermédiaire de roulements formant paliers 37 disposés à l'extérieur de la cuve 31 et portés par des bras 39 montés pivotant sur le châssis 33. L'arbre 36 peut ainsi tourner librement par rapport au châssis 33 autour de l'axe de rotation de compression X". L'arbre 36 est apte à être déplacé par des actionneurs, constitués dans ce mode de réalisation par des vérins 38, afin de faire varier la distance entre la surface extérieure 35a du galet 35 et la surface interne 32 de la cuve 31, autrement dit afin de faire varier la compression des matériaux 30 dans la zone centrale 52 du volume intérieur 63 de la cuve 31.

De préférence, la charge appliquée par le galet 35 via les vérins 38 est ajustée à distance au cours du fonctionnement du dispositif 50 et asservi à la puissance consommée par le groupe moto-réducteur 58 entraînant la cuve 31 en rotation.

La position des paliers 37 est contrôlée soit directement, soit indirectement sur les vérins 38 par des capteurs de déplacement, par exemple à technologie laser ou effet magnétostrictif, afin de vérifier la position en hauteur du galet 35 et son horizontalité.

De préférence, le dispositif 50 comprend un vérin 38 à chacune des deux extrémités de l'arbre 36 suivant la direction de l'axe de rotation de compression X". En outre, un dispositif d'asservissement commande les vérins 38 pour que l'angle entre l'axe de rotation de compression X" et l'axe de révolution X reste contant. En variante, bien que cela ne soit pas préféré, on pourrait remplacer les vérins 38 par des ressorts.

Le galet 35 est disposé en bas de la cuve, dans la moitié inférieure de la cuve 31, sensiblement tout en bas de la cuve 31. L'outil d'émiettement 40 se trouve disposé plus haut que le galet 35 dans la cuve 31, afin de laisser le bas de la cuve 31, au galet 35. En l'absence du galet 35, l'outil d'émiettement 40 pourrait être disposé en bas de la cuve 31.

Le dispositif 50 comprend en outre un dispositif de refroidissement par aspersion d'eau dans la zone aval 53. Ce dispositif d'aspersion d'eau comprend des trous 26 réalisés dans l'arbre 36 et répartis suivant la direction de l'axe de rotation de compression X" et autour de l'arbre 36. Ces trous 26 débouchent dans le coeur creux de l'arbre 36 qui alimenté en eau par une extrémité de l'arbre 36.

Le dispositif 50 comprend enfin d'une part à l'extrémité amont 31a de la cuve 31 un conduit traversant le flasque amont 54 et formant l'entrée 27 de liquide chauffée et un autre conduit, de plus grande section, traversant le flasque amont 54 et. formant, l'entrée 28 de matériaux sec, et d'autre part à l'extrémité aval 31b un racleur d'évacuation 61 décollant les matériaux 30 se trouvant contre la surface interne 32 de la cuve 31 pour les amener vers le centre de la cuve 31 où est disposé un déflecteur 29 s'étendant à travers le flasque aval 55 et formant sortie aval. L'entrée 27 de liquide et l'entrée 28 de produits secs débouchent sensiblement en bas de la cuve 31. Suivant le sens de rotation 25 de la cuve 31 l'entrée 28 de produits secs est disposée après l'entrée 27 de liquide.

De larges portes de visite 62 sont installées dans la zone centrale 52 de la cuve 31 afin de permettre un accès aisé au volume intérieur 63 de la cuve à des fins de maintenance, sans affaiblir la structure.

La cuve 31 est constituée de tôles envirolées et soudées d'épaisseur différentes selon les sollicitations mécaniques subies, aussi la plus forte épaisseur est située vis-à-vis du galet 35. Des blindages, non représentés sur les figures, protègent la surface intérieure 32 de l'usure. Leur épaisseur est adaptée à l'intensité des sollicitations, notamment une forte épaisseur équipera la zone centrale alors que de simples barrettes longitudinales soudées sur la surface intérieure 32 de la cuve 31 suffiront à la protéger de l'usure dans les zones amont 51 et aval 53.

L'ensemble du dispositif repose sur un châssis commun 33, de façon à contenir les charges développées par les différents organes à l'intérieur du dispositif sans les transmettre à l'environnement. Le dispositif 50 est ainsi autonome, les seules contraintes d'installation étant la reprise des poids propres et la connexion aux conduits d'alimentation et décharge des matériaux.

La cuve 31 est supportée sur le châssis 33 par deux paliers à patins 34a, 34b, l'un 34a situé du coté de l'extrémité amont 31a, de préférence sous le galet 35 où les sollicitations sur la cuve 31 sont les plus élevées, l'autre 34b du coté de l'extrémité aval 31b. Chaque palier 34, en référence à la figure 6, comprend deux patins 34a, 34b recouverts d'un alliage antifriction, en contact avec la surface extérieure de la cuve 31. La lubrification de l'interface patin/surface extérieure de la cuve 31 est réalisée par un film d'huile hydrodynamique qui se forme grâce à la vitesse de la cuve 31 et la viscosité de l'huile. Pour parfaire la lubrification, notamment dans les phases d'arrêt et de démarrage où la vitesse est nulle à un certain moment, une lubrification hydrostatique est réalisée en injectant de l'huile à haute pression au centre des patins 34, afin de forcer le décollage de la cuve 31 par rapport à la surface du patin 34. Les patins 34 sont montés sur des rotules axiales pour leur donner les degrés de liberté nécessaires à une portée parfaite sur la surface extérieure de la cuve 31. L'un des paliers 34 est équipé de patins également revêtus de métal antifriction sur ces faces latérales correspondant à deux collerettes soudées sur la surface extérieure de la cuve 31 de façon à maintenir axialement la cuve 31. Les patins 34 sont dimensionnés selon les efforts radiaux qu'ils reçoivent, le plus grand 34a étant placé sous le galet 35. D'autres systèmes pour supporter la cuve 31 comme des demi paliers lisses, des roulements ou des roues métalliques ou équipées de pneumatiques non détaillés ici, sont réalisables sans sortir du cadre de l'invention.

La couronne dentée 60 est boulonnée sur une bride soudée sur la virole de préférence dans la zone centrale 52, réalisant ainsi en plus le renforcement de la structure de la cuve 31 dans cette portion particulièrement sollicitée. Le pignon 59 est monté sur deux paliers boulonnés sur le châssis 33 dont l'écartement avec la couronne 60 est réglable pour ajuster l'engrènement. Pour simplifier l'arrangement, le couple d'engrenages est calculé pour pouvoir fonctionner avec une huile de lubrification commune à celle des patins 34. Aussi un seul carter protège l'ensemble formé par le pignon 59, la couronne dentée 60 et le palier 34a du côté de l'extrémité amont 31a. Un autre carter est installé autour du palier 34b situé du côté de l'extrémité aval 31b.

La motorisation comprend un moteur électrique accouplé à un réducteur de vitesse à engrenages parallèles connecté au pignon 59 grâce à une allonge à cardans. La vitesse de rotation résultante de la cuve 31, soit la vitesse nominale du moteur divisé par les rapports de réduction cumulés du réducteur et du couple pignon 59 et couronne dentée 60 est suffisante pour centrifuger, à savoir maintenir contre sa surface interne 32, les matériaux 30 que la cuve 31 contient. Un groupe de virage composé d'un moteur frein et d'un réducteur de vitesse à engrenages et d'un accouplement débrayable à commande manuelle peut être substitué au moteur principal afin de faire tourner la cuve à vitesse lente à dés fins de maintenance ou d'opérations particulières.

De préférence, le galet 35 est constitué par une chemise massive, considérée comme une pièce d'usure, et fixée de façon amovible sur l'arbre arbre 36.

En fonctionnement, la cuve 31 étant entrainée en rotation, des matériaux 30 sont introduits dans la zone amont 51 de la cuve 31 par l'entrée 27 de liquide et l'entrée 28 de produits secs.

De préférence, du liant est introduit en premier par l'entrée 27 de liquide, puis des charges sont déversées par l'entrée 28 de matières sèches. Le liant est' avantageusement introduit à haute température, typiquement 180 à 200 °C, dans le cas de brai liquide.

La cuve est entraînée par- le groupe moto-réducteur 58 dans le sens 25 à une vitesse suffisante pour que les matériaux 30 qu'elle contient soient centrifugés contre sa surface interne 32. Dans la zone amont 51, sous l'effet de la centrifugation, les matériaux 30 sont plaqués contre la surface interne 32 de la cuve 31 et entraînés en rotation vers le racleur 45 dont la-surface active 45a précipite les matériaux dans les couteaux 42 de l'outil d'émiettement 40, où ils subissent un premier mélange. Après l'outil d'émiettement 40, les matériaux 30, maintenant mélangés, sont à nouveau centrifugés sur la surface interne 32 dé la cuve 31 et repassent sous les entrées 27, 28 des matériaux bruts.

Trois couches de matériaux se forment alors : la première est composée des matériaux déjà introduits et mélangés et n'ayant pas encore quitté la zone amont 51, la deuxième couche sera du brai liquide alimenté de préférence avant les matières solides afin d'optimiser la rapidité d'intégration au sein des autres matériaux et enfin la troisième couche est constituée des matières solides. Les matériaux subissent ainsi plusieurs dizaines de cycles de mélange avant d'atteindre la zone centrale 52.

Dans la zone centrale 52, sur un cycle de fonctionnement les matériaux 30 centrifugés contre la surface interne 32 de la cuve 31 sont successivement comprimés par le galet 35, entraînés vers le racleur .45 qui décolle la couche compactée de matériaux 30 et la dirige vers l'outil d'émiettement 40 où la couche est finement désagglomérée, mélangée et cisaillée par les couteaux 42 tournant. Un autre cycle recommence alors, et ce plusieurs centaines de fois dans le processus global. La compression exercée par le galet 35 pousse le liant autour et à l'intérieur des porosités des grains solides de matières sèches, garantissant la qualité de l'interpénétration des constituants. Le malaxage dans l'outil d'émiettement 40 complète, en assurant le mélange, l'homogénéité de la pâte et l'enrobage des grains par le liant grâce an cisaillement intense que subit la couche de matériaux dans les couteaux 42.

Lorsque le galet 35 est pressé sur la pâte en cours de malaxage elle-même en rotation avec la cuve 31, le galet 35 est entraîné en rotation par frottement à une vitesse de rotation telle que la vitesse linéaire de sa surface extérieure 35a soit identique à celle de la pâte en rotation. Il est important de ne pas perturber cet équilibre pour ne pas créer de contraintes parasites dans la pâte et les organes du dispositif 50.

Le mélange et le malaxage dans les zones amont 51 et centrale 52 est fait avantageusement à haute température, typiquement 180 à 200 °C, pour profiter de la fluidité du brai. Cependant la pâte 30 à haute température n'est pas prête pour être utilisée de manière optimale, car ses caractéristiques mécaniques sont alors faibles. Il est nécessaire de la refroidir jusqu'à une température où telle recouvre suffisamment de consistante pour être manipulée suivant les nécessités du processus ultérieur.

A cet effet, conformément à l'invention, une zone aval 53 de refroidissement, est ménagée dans la cuve 31. De l'eau est déversée sur la pâte par les trous 26 de l'arbre 36 afin de refroidir la pâte, typiquement entre 145 et 170 °C, par transfert thermique entre la pâte et l'eau, le phénomène prépondérant d'échange étant la vaporisation de l'eau. L'eau peut être introduite comme le montre la figure 4b à travers l'arbre 36 portant le galet 35 pour une répartition homogène ou par tout autre conduit traversant le flasque aval 55. Dans la zone aval 55, la pâte 30 continue de subir des cycles de travail dans lés couteaux 42 de l'outil d'émiettement 40, où elle est dirigée par le racleur 45, comme dans la zone amont 51. Ainsi, le mélange et l'homogénéité de la pâte 30 ainsi que l'enrobage des grains par le liant sont améliorés, tout en refroidissant la pâte 30. Dans la zone aval 53, plusieurs centaines de cycles sont réalisés.

A l'extrémité aval 31b, la pâte finie est récoltée par le racleur d'évacuation 61 dans le conduit de sortie 29 traversant le flasque aval 55.

Avantageusement, une aspiration des vapeurs et poussières, notamment de la vapeur d'eau produite par le refroidissement est réalisée par le conduit de sortie 29.

Bien entendu, l'invention n'est nullement limitée aux modes de réalisations décrits à titre d'exemples illustratifs non limitatifs.

Ainsi, l'invention n'est pas limitée au mélange et au malaxage des matières premières utilisées pour la fabrication de pâte d'anode ou de cathode, composée de brai liquide, de coke et de déchets de fabrication concassés et broyés. Elle est applicable à toute fabrication de pâte par mélange et malaxage à partir d'un ou plusieurs constituants.

D'autre part, en variante, les paliers 37 pourraient être guidés dans des glissières solidaires du châssis 33 et assujettis à l'action directe de vérins hydrauliques 38.

Par ailleurs, afin de créer un mouvement des matériaux de l'extrémité amont 31a vers l'extrémité aval 31b de la cuve 31, au lieu d'être cylindrique, la cuve 31 pourrait être légèrement conique, en s'évasant vers l'extrémité aval 31b. L'axe de révolution X, ainsi que l'axe de rotation d'émiettement X' et l'axe de rotation de compression X" seraient alors avantageusement parallèles et horizontaux.

## Revendications

1. Procédé pour préparer une pâte par mélange ou malaxage de matériaux, notamment pour la réalisation d'électrodes de production d'aluminium, ledit procédé comprenant les opérations suivantes :
a) introduire des matériaux (30) à mélanger et à malaxer par une extrémité (31a) amont d'une cuve (31), la cuve (31) présentant une surface interne (32) s'étendant suivant un axe de révolution (X) sensiblement horizontal depuis une extrémité amont (31a) jusqu'à une extrémité aval (31b), ladite extrémité aval (31b) étant opposée à l'extrémité amont (31a) suivant la direction de l'axe de révolution (X), l'extrémité amont (31a) étant obturée par un flasque amont (54) et l'extrémité aval (31b) étant obturée par un flasque aval (55), le flasque amont (54) et le flasque (55) aval étant fixes par rapport aux châssis (33) et constitués chacun par une plaque s'étendant sensiblement perpendiculairement à l'axe de révolution X,
b) entrainer la cuve (31) en rotation autour de l'axe de révolution (X) et plaquer les matériaux (30) par centrifugation contre la surface interne (32) de la cuve (31) s'étendant depuis l'extrémité amont (31a) de la cuve (31) jusqu'à l'extrémité aval (31b), et comprimer mécaniquement les matériaux contre la surface interne (32) de la cuve (31) au moyen d'un galet (35), un espace aval (53) étant ménagé entre le galet (35) et l'extrémité aval (31b)
c) décoller localement de la surface interne (32) les matériaux (30) centrifugés par la rotation de la cuve (31) et les faire tomber sur un outil d'émiettement (40) disposé sensiblement jusqu'à l'extrémité aval (31b),
d) refroidir les matériaux dans l'espace aval (53) en déversant de l'eau introduite à travers un arbre (36) portant le galet (35), l'arbre (36) traversant le flasque amont (54) et le flasque aval (55) et en rotation autour d'un axe de rotation de compression (X") librement par rapport au châssis (33), des trous (26) étant réalisés dans l'arbre (36) et répartis suivant la direction de l'axe de rotation de compression (X") et autour de l'arbre (36), les trous (26) débouchant dans le coeur de l'arbre (36) qui est alimenté en eau par une extrémité de l'arbre (36),
e) récupérer les matériaux (30) intimement mélangés, malaxés et refroidis à l'extrémité aval (31b) de la cuve (31),
les matériaux (30) étant mélangés, malaxés et refroidis en continu, en réalisant simultanément les opérations a), b), c), d) et e), des matériaux étant introduits par l'extrémité amont (31a, 27, 28) pendant que des matériaux introduits précédemment sont maintenus dans la cuve (31) et que d'autres matériaux, intimement mélangés, sont récupérés à l'extrémité aval (31b, 29).

2. Procédé selon la revendication 1, dans lequel à l'opération c) on décolle les matériaux (30) avec un racleur (45) maintenu fixe au-dessus de l'outil d'émiettement, on munit l'outil d'émiettement de couteaux (42) et on fait tourner l'outil d'émiettement (40) en rotation suivant un axe de rotation d'émiettement (X') sensiblement parallèle à l'axe de révolution (X).

3. Procédé selon la revendication 2, dans lequel :
- on dispose les couteaux (42) sensiblement radialement à l'axe de rotation d'émiettement (X'), de sorte à venir sensiblement au contact de la surface interne (32) de la cuve (31) au cours de la rotation de l'outil d'émiettement (40),
- on fait tomber les matériaux (30) entre l'axe de rotation d'émiettement (X') et l'endroit où les couteaux viennent sensiblement au contact de la surface interne (32). de la cuve (31), et
- on fait tourner l'outil d'émiettement (40) dans le même sens (25) que la cuve (31).

4. Procédé selon l'une quelconque des revendications précédentes, dans lequel, suivant la direction de l'axe de révolution (X), on dispose l'outil d'émiettement (40) sensiblement jusqu'à l'extrémité amont (31a), mais on ménage un espace amont (51) entre l'extrémité amont (31a) et le galet (35).

5. Procédé selon l'une quelconque des revendications précédentes dans lequel on introduit en continu dans la cuve (31), en partie inférieure de ladite cuve (31), un liant liquide (27), en particulier du brai de houille liquide, puis un produit de charge (28), en particulier du coke calciné sur le brai de houille.

6. Procédé selon l'une quelconque des revendications précédentes dans lequel on déplace les .matériaux (30) vers l'extrémité aval (31b) avec l'outil d'émiettement (40).

7. Dispositif (50) pour préparer une pâte par mélange ou malaxage de matériaux, notamment pour la réalisation d'électrodes de production d'aluminium, ledit dispositif comprenant :
- un châssis (33),
- une cuve (31) présentant une surface interne (32) s'étendant suivant un axe de révolution (X) sensiblement horizontal depuis une extrémité amont (31a) obturée par un flasque amont (54) jusqu'à une extrémité aval (31b) obturée par un flasque aval (55), le flasque amont (54) et le flasque (55) aval sont fixes par rapport aux châssis (33) et constitués chacun par une plaque s'étendant, sensiblement perpendiculairement à l'axe de révolution (X),
- un dispositif d'entrainement (58, 59, 60) de la cuve (31) en rotation autour de l'axe de révolution (X) par rapport au châssis (33),
- un racleur (45) disposé à proximité de la surface interne (32) de la cuve (31), et
- un outil d'émiettement (40) disposé sensiblement jusqu'à l'extrémité amont (31a), et disposé sensiblement jusqu'à l'extrémité aval (31b) et disposé sous le racleur (45),
- un galet (35) libre en rotation autour d'un axe de rotation de compression (X") sensiblement parallèle à l'axe de révolution (X), un espace amont étant ménagé entre l'extrémité amont (31a) et le galet (35), et un espace aval étant ménagé entre l'extrémité aval (31b) et le galet (35),
- des moyens de pression (38) pour exercer une pression sur le galet (35) en direction de la surface interne (32) de la cuve (31)
où le galet (35) est porté par un arbre (36) traversant le flasque amont (54) et le flasque aval (55),
ledit dispositif (50) étant **caractérisé en ce que** l'arbre (36) portant le galet (35) comprend des trous (26) pour asperger de l'eau dans l'espace aval (53), les trous (26) étant réalisés dans l'arbre (36) et répartis suivant la direction de l'axe de rotation de compression (X") et autour de l'arbre (36), les trous (26) débouchant dans le coeur de l'arbre (36) qui est alimenté en eau par une extrémité de l'arbre (36).

8. Dispositif selon la revendication précédente dans lequel le galet (35) est disposé sensiblement au bas de la cuve (31) et l'outil d'émiettement (40) est situé plus haut que le galet (35).

9. Dispositif selon la revendication 7 ou la revendication 8 dans lequel les moyens de pression comprennent des vérins (38) et un dispositif d'asservissement des vérins (38) contrôlant l'application d'une pression constante du galet (35) le long de l'axe de rotation de compression (X").

10. Dispositif selon la revendication précédente dans lequel les vérins (38) sont décalés l'un par rapport à l'autre suivant la direction de l'axe de rotation de compression (X") et le dispositif d'asservissement contrôle un déplacement simultané des vérins (38) pour maintenir constant l'angle entre l'axe de rotation de compression (X") et l'axe de révolution (X).

11. Dispositif selon l'une quelconque des revendications 7 à 10 dans lequel l'outil d'émiettement (40) est entrainé en rotation suivant un axe de rotation d'émiettement (X') sensiblement parallèle à l'axe de révolution (X).

12. Dispositif selon l'une quelconque des revendications 7 à 11 dans lequel :
l'axe de révolution (X) est légèrement incliné vers le bas en direction de l'extrémité aval (31b), afin d'induire un déplacement des matériaux (30) dans la cuve (31) de l'extrémité amont (31a) vers l'extrémité aval (31b).

13. Dispositif selon l'une quelconque des revendications 7 à 11 dans lequel :
l'outil d'émiettement (40) s'écarte progressivement de la surface intérieure (32) de la cuve (31) en direction de l'extrémité aval (31b).

14. Dispositif selon l'une quelconque des revendications 7 à 13 comprenant en outre un bras de réglage (46) portant le racleur (45), ledit bras de réglage (46) étant apte à pivoter autour de l'axe de révolution (X) pour ajuster la position du racleur (45).

15. Dispositif selon l'une quelconque des revendications 7 à 14 dans lequel la cuve (31) comprend à l'extrémité amont (31a) une entrée chauffée (27) de matériau liquide à une température supérieure ou égale à 150°C et une entrée non chauffée (28) de matériau non liquide.

16. Dispositif selon la revendication précédente dans lequel l'entrée de matériau liquide (27) et l'entrée de matériau non liquide (28) sont disposées en partie inférieure de la cuve et l'entrée de matériau liquide (27) est disposée en amont de l'entrée de matériau non liquide (28), suivant le sens de rotation (25) de la cuvé (31).

17. Dispositif selon l'une quelconque des revendications 7 à 16 dans lequel l'outil d'émiettement (40) comprend des couteaux (42) s'étendant radicalement à l'axe de rotation d'émiettement (X') et adaptés pour venir sensiblement au contact de la surface interne (32) de la cuve (31).

## Patentansprüche

1. Verfahren zur Herstellung einer Paste durch Mischen oder Kneten von Materialien, insbesondere zur Herstellung von Elektroden zur Aluminiumproduktion, wobei das Verfahren die folgenden Schritte umfasst:
a) Einbringen der zu mischenden und zu knetenden Materialien (30) durch ein stromaufwärts gelegenes Ende (31 a) eines Behälters (31), wobei der Behälter (31) eine Innenfläche (32) aufweist, die sich entlang einer im Wesentlichen horizontalen Drehachse (X) von einem stromaufwärts gelegenen Ende (31 a) bis zu einem stromabwärts gelegenen Ende (31 b) erstreckt, wobei das stromabwärts gelegene Ende (31 b) dem stromaufwärts gelegenen Ende (31 a) in Richtung der Drehachse (X) gegenüber liegt, wobei das stromaufwärts gelegene Ende (31 a) durch einen stromaufwärts gelegenen Deckel (54) verschlossen ist und das stromabwärts gelegene Ende (31 b) durch einen stromabwärts gelegenen Deckel (55) verschlossen ist, wobei der stromaufwärts gelegene Deckel (54) und der stromabwärts gelegene Deckel (55) am Gestell (33) befestigt sind und jeweils von einer sich im Wesentlichen senkrecht zur Drehachse (X) erstreckenden Platte gebildet werden,
b) Versetzen des Behälters (31) in Rotation um die Drehachse (X) und Drücken der Materialien (30) durch Zentrifugierung an die sich vom stromaufwärts gelegenen Ende (31 a) des Behälters (31) bis zum stromabwärts gelegenen Ende des Behälters (31 b) erstreckende Innenfläche (32) des Behälters (31) und mechanisches Komprimieren der Materialien an der Innenfläche (32) des Behälters (31) mittels einer Rolle (35), wobei zwischen der Rolle (35) und dem stromabwärts gelegenen Ende (31 b) ein stromabwärts gelegener Raum (53) vorgesehen ist,
c) stellenweises Ablösen der zentrifugierten Materialien (30) von der Innenfläche (32) durch die Rotation des Behälters (31) und deren Herabfallen auf ein im Wesentlichen bis zum stromabwärts gelegenen Ende (31 b) angeordnetes Zerkleinerungswerkzeug (40),
d) Abkühlen der Materialien im stromabwärts gelegenen Raum (53) durch Einleitung von Wasser durch eine die Rolle (35) tragende Welle (36), wobei die Welle (36) den stromaufwärts gelegenen Deckel (54) und den stromabwärts gelegenen Deckel (55) durchquert und relativ zum Gestell (33) frei um eine Komprimierungsrotationsachse (X") rotiert, wobei in die Welle (36) Löcher (26) eingebracht sind und in Richtung der Komprimierungsrotationsachse (X") um die Welle (36) verteilt sind, wobei die Löcher (26) in das Innere der Welle (36) münden, das durch ein Ende der Welle (36) mit Wasser versorgt wird,
e) Rückgewinnung der gründlich gemischten, gekneteten und abgekühlten Materialien (30) am stromabwärts gelegenen Ende (31 b) des Behälters (31),
wobei die Materialien (30) kontinuierlich gemischt, geknetet und abgekühlt werden und gleichzeitig die Schritte a), b), c), d) und e) ausgeführt werden, wobei Materialien durch das stromaufwärts gelegene Ende (31 a, 27, 28) eingebracht werden, während zuvor eingebrachte Materialien im Behälter (31) gelassen werden und andere gründlich gemischte Materialen am stromabwärts gelegenen Ende (31 b, 29) rückgewonnen werden.

2. Verfahren nach Anspruch 1, wobei die Materialen (30) in Schritt c) mit einem über dem Zerkleinerungswerkzeug fest gehaltenen Abstreifer (45) abgelöst werden, das Zerkleinerungswerkzeug mit Messern (42) versehen ist und das Zerkleinerungswerkzeug (40) entlang einer im Wesentlichen parallel zur Drehachse (X) verlaufenden Zerkleinerungsrotationsachse (X') gedreht wird.

3. Verfahren nach Anspruch 2, wobei:
- die Messer (42) im Wesentlichen radial zur Zerkleinerungsrotationsachse (X') anordnet sind, so dass sie während der Rotation des Zerkleinerungswerkzeugs (40) im Wesentlichen mit der Innenfläche (32) des Behälters (31) in Kontakt kommen,
- die Materialien (30) zwischen der Zerkleinerungsrotationsachse (X') und der Stelle, wo die Messer im Wesentlichen mit der Innenfläche (32) des Behälters (31) in Kontakt kommen, herabfallen, und
- das Zerkleinerungswerkzeug (40) in die gleiche Drehrichtung (25) wie der Behälter (31) gedreht wird.

4. Verfahren nach einem der vorangehenden Ansprüche, wobei das Zerkleinerungswerkzeug (40) im Wesentlichen bis zum stromaufwärts gelegenen Ende (31 a) in Richtung der Drehachse (X) anordnet ist, aber zwischen dem stromaufwärts gelegenen Ende (31 a) und der Rolle (35) ein stromaufwärts gelegener Raum (51) vorgesehen ist.

5. Verfahren nach einem der vorangehenden Ansprüche, wobei in den Behälter (31), in den unteren Teil des Behälters (31), kontinuierlich ein flüssiges Bindemittel (27), insbesondere flüssiges Steinkohlenpech, dann ein Füllstoff (28), insbesondere kalzinierter Koks, auf das Steinkohlenpech eingebracht wird.

6. Verfahren nach einem der vorangehenden Ansprüche, wobei die Materialien (30) mit dem Zerkleinerungswerkzeug (40) zum stromabwärts gelegenen Ende (31 b) bewegt werden.

7. Vorrichtung (50) zur Herstellung einer Paste durch Mischen oder Kneten von Material, insbesondere für die Herstellung von Elektroden zur Aluminiumproduktion, wobei die Vorrichtung umfasst:
- ein Gestell (33),
- einen Behälter (31), der eine Innenfläche (32) aufweist, die sich entlang einer im Wesentlichen horizontalen Drehachse (X) von einem stromaufwärts gelegenen, durch einen stromaufwärts gelegenen Deckel (54) verschlossenen Ende (31 a) bis zu einem stromabwärts gelegenen, durch einen stromabwärts gelegenen Deckel (55) verschlossenen Ende (31 b) erstreckt, wobei der stromaufwärts gelegene Deckel (54) und der stromabwärts gelegene Deckel (55) am Gestell (33) befestigt sind und jeweils von einer sich im Wesentlichen senkrecht zur Drehachse (X) erstreckenden Platte gebildet werden,
- eine Vorrichtung (58, 59, 60) zum Versetzen des Behälters (31) in Rotation um die Drehachse (X) relativ zum Gestell (33),
- einen in der Nähe der Innenfläche (32) des Behälters (31) angeordneten Abstreifer (45), und
- ein im Wesentlichen bis zum stromaufwärts gelegenen Ende (31 a) angeordnetes und im Wesentlichen bis zum stromabwärts gelegenen Ende (31 b) angeordnetes unter dem Abstreifer (45) angeordnetes Zerkleinerungswerkzeug (40),
- eine Rolle (35), die frei um eine im Wesentlichen parallel zur Drehachse (X) verlaufende Komprimierungsrotationsachse (X") rotiert, einen stromaufwärts gelegenen, zwischen dem stromaufwärts gelegenen Ende (31 a) und der Rolle (35) vorgesehenen Raum und einen stromabwärts gelegenen, zwischen dem stromabwärts gelegenen (31 b) Ende und der Rolle (35) vorgesehenen Raum,
- Druckmittel (38), um auf die Rolle (35) einen Druck in Richtung der Innenfläche (32) des Behälters (31) auszuüben,
wo die Rolle (35) von einer den stromaufwärts gelegenen Deckel (54) und den stromabwärts gelegenen Deckel (55) durchquerenden Welle (36) getragen wird, wobei die Vorrichtung (50) **dadurch gekennzeichnet ist, dass** die die Rolle (35) tragende Welle (36) Löcher (26) zum Spritzen von Wasser in den stromabwärts gelegenen Raum (53) umfasst, wobei die Löcher (26) in die Welle (36) eingebracht sind und in Richtung der Komprimierungsrotationsachse (X") um die Welle (36) verteilt sind, wobei die Löcher (26) in das Innere der Welle (36) münden, das durch ein Ende der Welle (36) mit Wasser versorgt wird.

8. Vorrichtung nach dem vorangehenden Anspruch, wobei die Rolle (35) im Wesentlichen im unteren Teil des Behälters (31) angeordnet ist und das Zerkleinerungswerkzeug (40) höher als die Rolle (35) liegt.

9. Vorrichtung nach Anspruch 7 oder Anspruch 8, wobei die Druckmittel Zylinder (38) und eine Vorrichtung zur Regelung der Zylinder (38) umfassen, die die Aufbringung eines konstanten Drucks der Rolle (35) entlang der Komprimierungsrotationsachse (X") steuert.

10. Vorrichtung nach dem vorangehenden Anspruch, wobei die Zylinder (38) in Richtung der Komprimierungsrotationsachse (X") zueinander versetzt sind und die Regelungsvorrichtung eine gleichzeitige Verschiebung der Zylinder (38) steuert, um den Winkel zwischen der Komprimierungsrotationsachse (X") und der Drehachse (X) konstant zu halten.

11. Vorrichtung nach einem der Ansprüche 7 bis 10, wobei das Zerkleinerungswerkzeug (40) entlang einer im Wesentlichen parallel zur Drehachse (X) verlaufenden Zerkleinerungsrotationsachse (X') in Rotation versetzt wird.

12. Vorrichtung nach einem der Ansprüche 7 bis 11, wobei:
die Drehachse (X) leicht in Richtung des stromabwärts gelegenen Endes (31 b) nach unten geneigt ist, um eine Bewegung der Materialien (30) im Behälter (31) vom stromaufwärts gelegenen Ende (31 a) zum stromabwärts gelegenen Ende (31 b) herbeizuführen.

13. Vorrichtung nach einem der Ansprüche 7 bis 11, wobei:
das Zerkleinerungswerkzeug (40) sich nach und nach von der Innenfläche (32) des Behälters (31) in Richtung des stromabwärts gelegenen Endes (31 b) entfernt.

14. Vorrichtung nach einem der Ansprüche 7 bis 13, ferner umfassend einen den Abstreifer (45) tragenden Stellarm (46), wobei der Stellarm (46) fähig ist, um die Drehachse (X) zu schwenken, um die Position des Abstreifers (45) einzustellen.

15. Vorrichtung nach einem der Ansprüche 7 bis 14, wobei der Behälter (31) am stromaufwärts gelegenen Ende (31 a) einen auf eine Temperatur von über oder gleich 150°C beheizten Eingang (27) für flüssiges Material und einen nicht beheizten Eingang (28) für nicht flüssiges Material umfasst.

16. Vorrichtung nach dem vorangehenden Anspruch, wobei der Eingang für flüssiges Material (27) und der Eingang für nicht flüssiges Material (28) im unteren Teil des Behälters angeordnet sind und der Eingang für flüssiges Material (27) stromaufwärts des Eingangs für nicht flüssiges Material (28) in Drehrichtung (25) des Behälters (31) angeordnet ist.

17. Vorrichtung nach einem der Ansprüche 7 bis 16, wobei das Zerkleinerungswerkzeug (40) Messer (42) umfasst, die sich radial zur Zerkleinerungsrotationsachse (X') erstrecken und angepasst sind, um im Wesentlichen mit der Innenfläche (32) des Behälters (31) in Kontakt zu kommen.

## Claims

1. Method for preparing a paste by mixing or kneading materials, particularly for making aluminum production electrodes, said method comprising the following operations:
a) introducing at an upstream end (31a) of a drum (31) the materials (30) to be mixed and kneaded, the drum (31) having an inner surface (32) extending along an axis of revolution (X) substantially horizontal from an upstream end (31a) to a downstream end (31b), said downstream end (31b) being opposed to the upstream end (31a) along the axis of revolution (X), the upstream end (31a) being closed by an upstream plate (54) and the downstream end (31b) being closed by a downstream end (55), the upstream end (54) and the downstream end (55) being fixed relative to the frame (33) and being each constituted by a plate extending substantially perpendicularly to the axis of revolution (X)
b) rotating the drum (31) around the axis of revolution (X) and urging the materials (30) via centrifugation against the inner surface (32) of the drum (31) extending from the upstream end (31a) of the drum (31) to the downstream end (31b), and mechanically compressing the materials (30) against an inner surface (32) of the drum (31) by means of a roller (35), an upstream space (53) being arranged between the roller (35) and the downstream end (31b),
c) locally dislodging from the inner surface (32) the materials (30) centrifuged by the rotation of the drum (31) and causing them to fall onto a granulating tool (40) substantially arranged to the downstream end (31b),
d) cooling the materials in the upstream space (53) by pouring water introduced through an shaft (36) bearing the roller (35, the shaft (36) passing through the upstream pale (54) and the downstream plate (55) and in rotation around an axis of rotation of compression (X") freely relative to the frame (33), holes (26) being arranged in the shaft (36) and distributed along the direction of the axis of rotation of compression (X") and around the shaft (36), the holes (26) leading into the core of the shaft (36) which is provided in water at an end of the shaft (36),
e) collecting the materials (30) thoroughly mixed, kneaded and cooled at the downstream end (31b) of the drum (31),
the materials (30) being mixed, kneaded and cooled continuously, by performing simultaneously operations a), b), c), d) et e), the materials being introduced at the upstream end (31a, 27, 28) while the materials previously introduced are kept in the drum (31) and other materials, thoroughly mixed, are collected at the downstream end (31b).

2. Method according to claim 1, wherein, in operation c), the materials (30) are dislodged using a scraper (45) maintained in a fixed position above the granulating tool, the granulating tool is equipped with blades (42), and the granulating tool (40) is made to rotate about a granulation axis of rotation (X') that is substantially parallel to the axis of revolution (X).

3. Method according to claim 2, wherein:
- the blades (42) are substantially arranged radially to the granulation axis of rotation (X'), so as to come substantially in contact with the inner surface (32) of the drum (31) during the rotation of the granulating tool (40),
- the materials (30) fall between the granulation axis of rotation (X') and the location where the blades come substantially in contact with the inner surface (32) of the drum (31), and
- the granulating tool (40) is rotated in the same direction (25) as the drum (31).

4. Method according to any of previous claims, wherein the granulating tool (40) extends substantially to the upstream end (31a) in the direction of the axis of revolution (X), but an upstream space (51) is arranged between the upstream end (31a) and the roller (35).

5. Method according to any one of previous claims, wherein a liquid binder (27), particularly liquid coal-tar pitch, is continuously introduced into the drum (31), into the lower portion of said drum (31), followed by a filler (28), particularly calcined coke, introduced onto the coal-tar pitch.

6. Method according to any one of the above claims, wherein the materials (30) are advanced by the granulating tool (40) towards the downstream end (31b).

7. Device (50) for preparing a paste by kneading or mixing materials, particularly for making aluminum production electrodes, said device comprising:
- a frame (33),
- a drum (31) having an inner surface (32) extending along an axis of revolution (X) substantially horizontal from a upstream end (31a) closed by an upstream plate (54) to a downstream end (31b) closed by a downstream plate (55), the upstream plate (54) and the downstream plate (55) being fixed relative to the frame (33) and being each constituted by a plate extending substantially perpendicularly to the axis of revolution (X),
- a device (58, 59, 60) for rotating the drum (31) around the axis of revolution (X) relative to the frame (33),
- a scraper (45) placed in proximity to the inner surface (32) of the drum (31), and
- a granulating tool (40) substantially arranged to the upstream end (31a), and substantially arranged to the downstream end (31b) and arranged under the scrape (45),
- a roller (35), which rotates freely around a compression axis of rotation (X") substantially parallel to the axis of revolution (X), an upstream space being arranged between the upstream end (31a) and the roller (35), and a downstream end being arranged between the downstream end (31b) and the roller (35),
- means (38) for exerting pressure on the roller (35) in the direction of the inner surface (32) of the drum (31)
wherein the roller (35) is born by a shaft (36) passing through the upstream plate (54) and the downstream plate (55),
said device (50) being **characterized in that** the shaft (36) bearing the roller (35) comprises holes (26) for spraying water in the downstream end (31b), the holed being arranged in the shaft (36) and distributed along the direction of the axis of rotation of compression (X") and around the shaft (36), the holes (26) leading into the core of the shaft (36) which is provided in water at an end of the shaft (36).

8. Device according to the above claim, wherein the roller (35) is arranged substantially at the bottom of the drum (31) and the granulating tool (40) is positioned higher than the roller (35).

9. Device according to claim 13 or claim 14, wherein the means of exerting pressure comprises actuators (38) and a control device for the actuators (38) which controls the application of constant pressure from the roller (35) along the compression axis of rotation (X").

10. Device according to the above claim, wherein the actuators (38) are staggered relative to each other in the direction of the compression axis of rotation (X"), and the control device controls a simultaneous displacement of the actuators (38) to maintain a constant angle between the compression axis of rotation (X") and the axis of revolution (X).

11. Device according to any one of claims 7 to 10, wherein the granulating tool (40) is driven to rotate around a granulation axis of rotation (X') substantially parallel to the axis of revolution (X).

12. Device according to any one of claims 7 to 11 wherein:
the axis of revolution (X) has a slight downward tilt in the direction of the downstream end (31b), to encourage the materials (30) in the drum (31) to move from the upstream end (31a) towards the downstream end (31b).

13. Device according to any one of claims 7 to 11, wherein:
the granulating tool (40) progressively moves away from the inner surface (32) of the drum (31) in the direction of the downstream end (31b).

14. Device according to any one of claims 7 to 13, additionally comprising an adjustment arm (46) supporting the scraper (45), said adjustment arm (46) being pivotable around the axis of revolution (X) in order to adjust the position of the scraper (45).

15. Device according to any one of claims 7 to 14, wherein the drum (31) comprises at the upstream end (31a) a heated inlet (27) for liquid material at a temperature greater than or equal to 150°C and an unheated inlet (28) for non-liquid material.

16. Device according to the above claim, wherein the inlet for liquid material (27) and the inlet for non-liquid material (28) are arranged in the lower portion of the drum, and the inlet for liquid material (27) is upstream from the inlet for non-liquid material (28) relative to the direction of rotation (25) of the drum (31).

17. Device according to any one of claims 7 to 16, wherein the granulating tool (40) comprises blades (42) extending radially to the granulation axis of rotation (X') and adapted to come substantially into contact with the inner surface (32) of the drum (31).
